# EUROPÄISCHE PATENTSCHRIFT

(11) **EP 2 247 464 B1**
(45) Veröffentlichungstag und Bekanntmachung des Hinweises auf die Patenterteilung: **23.11.2011**
(21) Anmeldenummer: 09716162.4
(22) Anmeldetag: 19.02.2009
(51) Int. Cl.: B60K 28/00, B62D 6/00, B62D 1/16

(54) **LENKUNGSANORDNUNG FÜR EIN FAHRZEUG MIT EINER DREHBAREN LENKHANDHABE**
STEERING ARRANGEMENT FOR A VEHICLE, COMPRISING A ROTATABLE STEERING HANDLE
SYSTÈME DE DIRECTION POUR VÉHICULE, POURVU D'UN ORGANE DE DIRECTION ROTATIF

(30) Priorität: 28.02.2008 DE 102008011621
(43) Veröffentlichungstag der Anmeldung: 10.11.2010
(73) Patentinhaber: ThyssenKrupp Presta Aktiengesellschaft, 9492 Eschen (LI)
(72) Erfinder: LUTZ, Christian, A-6714 Nüziders (AT)
(74) Vertreter: Hofmann, Ralf U.
(86) Internationale Anmeldenummer: PCT/AT2009/000063
(87) Internationale Veröffentlichungsnummer: WO 2009/105799

(56) Entgegenhaltungen:
- EP-A- 1 410 972
- EP-A- 1 777 094
- WO-A1-2009/092527
- WO-A1-2009/092527

## Beschreibung

Die vorliegende Erfindung betrifft eine Lenkungsanordnung für ein Fahrzeug mit einer drehbaren Lenkhandhabe, insbesondere einem Lenkrad, und einer damit drehfest verbundenen Lenkspindel und zumindest einer Erzeugereinrichtung für zumindest eine mechanische Schwingung, insbesondere ein haptisches Signal, wobei die Lenkungsanordnung zumindest einen Schwingarm aufweist und am Schwingarm ein Klopfhammer gehalten ist und der Schwingarm zur Auslenkung des Klopfhammers mit der Erzeugereinrichtung in Verbindung steht, wobei der Schwingarm an einem Bauteil der Lenkungsanordnung in einem Fixierbereich fixiert ist und der Klopfhammer am Schwingarm gegenüber dem Fixierbereich auslenkbar gehalten ist und der Klopfhammer mit einem Bauteil der Lenkungsanordnung in Kontakt bringbar ist.

Grundgedanke der an sich bekannten Lenkungsanordnungen mit einer Erzeugereinrichtung für zumindest ein haptisches Signal ist es, dem Fahrer des Fahrzeuges über den in seinen Händen vorhandenen Tastsinn ein Signal, insbesondere ein Warnsignal, zu übermitteln. Nun ist es grundsätzlich denkbar, die Erzeugereinrichtung direkt in die Lenkhandhabe bzw. das Lenkrad zu integrieren. Nachdem ein Lenkrad aber immer drehbar aufgehängt sein muss, stellen sich hier Probleme mit der Signalübertragung auf das Lenkrad. Dies kann zwar durch Schleifringe oder verdrillte Drähte oder dgl. gelöst werden, ist aber immer relativ aufwändig.

Ein anderer Ansatz haptische Signale auf ein Lenkrad zu übertragen, ist aus der DE 10 2004 062 820 A1 bekannt, in dieser Schrift wird ein wiederaufladbarer mechanischer Energiespeicher z. B. in Form eines tordierbaren elastischen Körpers vorgeschlagen, welcher mittels Reibschluss, gegebenenfalls über ein Umkehrrad oder direkt, auf die mit dem Lenkrad verbundene Lenkspindel einwirkt. Hierdurch wird zwar die Notwendigkeit der Signalübertragung mittels Schleifring oder verdrillten Drähten vermieden. Dennoch ist ein relativ aufwändiger Zusatzteil notwendig, um die haptischen Signale auf das Lenkrad übertragen zu können. Darüber hinaus erscheint es fraglich, ob die in dieser Schrift vorgeschlagene Übertragung mittels Reibeschluss auf Dauer zuverlässig arbeitet.

Eine Lösung mit einer formschlüssigen Übertragung eines haptischen Signals auf eine Lenksäule eines Fahrzeuges wird in der DE 10 306 100 A1 vorgeschlagen. Hier wird über den Eingriff von verschiedenen Verzahnungen ineinander ein haptisch wahrnehmbares, richtungsselektives und impulsartig angelegtes Drehmoment in Abhängigkeit einer von einem Erfassungssystem erfassten Richtungsabweichung auf die Lenksäule und damit auf das Lenkrad übertragen. Auch die in der DE 10 306 100 A1 gezeigten Anordnungen sind technisch relativ aufwendig.

Aus der EP 1 777 094 A1 ist eine Schwingarm-Klopfanordnung für ein Fahrzeugpedal bekannt. In der EP 1 410 972 A2 ist der Schwingarm axial verschiebbar in einem Spulenkörper gelagert. Aus der prioritätsälteren aber nicht vorveröffentlichten WO 2009/092527 A1 ist eine Erzeugereinrichtung mit internem Klopfhammer bekannt, welcher auf einer Lamelle angeordnet ist.

Aufgabe der Erfindung ist es, einen alternativen Lösungsvorschlag zu machen, wie mit einer möglichst einfachen Konstruktion eine mechanische Schwingung bzw. ein haptisches Signal bei einer gattungsgemäßen Lenkungsanordnung auf eine Lenkhandhabe bzw. ein Lenkrad übertragen werden kann.

Hierfür wird vorgeschlagen, dass die Erzeugereinrichtung am Schwingarm zwischen dem Fixierbereich und dem Klopfhammer angreift.

Es ist somit zur Erzeugung der mechanischen Schwingung ein Schwingarm vorgesehen, welcher einerseits mit seinem Fixierbereich an einem Bauteil der Lenkungsanordnung fix befestigt ist und andererseits aber einen Klopfhammer hält, welcher über den Schwingarm gegenüber dem Fixierbereich ausgelenkt werden kann und, vorzugsweise zusammen mit dem Schwingarm oder einem Teil des Schwingarms, in eine Schwingbewegung versetzbar ist. Zur Erzeugung der Schwingbewegung ist die Erzeugereinrichtung vorgesehen, welche mit dem Schwingarm in Verbindung steht. Durch die mechanische Schwingung ist der Klopfhammer mit einem Bauteil der Lenkungsanordnung in Kontakt bringbar. Hierdurch kann erreicht werden, dass bei Betätigung der Erzeugereinrichtung der Klopfhammer in Schwingung versetzt wird gegen ein Bauteil der Lenkungsanordnung klopft. Diese an dem Bauteil der Lenkungsanordnung erzeugte Schwingung kann dann, gegebenenfalls über verschiedene andere Bauteile der Lenkungsanordnung auf die Lenkspindel und damit auf die Lenkhandhabe bzw. das Lenkrad übertragen werden, so dass bei Betätigung der Erzeugereinrichtung ein haptisches, also von der Hand des Fahrers an der Lenkhandhabe spürbares Signal erzeugt wird. Alternativ oder zusätzlich kann die so erzeugte mechanische Schwingung im Fahrgastinnenraum des Fahrzeuges hörbar sein. In diesem Sinne wird somit ein haptisches und/oder akustisches Signal erzeugt. In einfachen Worten ausgedrückt weist die Lenkungsanordnung somit eine Art Klingel auf, die gegebenenfalls sowohl haptische, also von Hand spürbare, als auch akustische, also hörbare Signale erzeugen kann.

Um den Klopfhammer in Schwingung versetzen zu können, weist der Schwingarm günstigerweise zumindest eine, vorzugsweise mittels der Erzeugereinrichtung in mechanische Schwingung versetzbare Lamelle auf, an der der Klopfhammer direkt oder indirekt gehalten sein kann. Die Lamelle ist dabei der bewegliche bzw. elastisch deformierbare Teil. Der Schwingarm kann vollständig aus einer solchen elastischen bzw. in Schwingung versetzbaren Lamelle bestehen. Es ist aber auch möglich, dass der Schwingarm an sich im Wesentlichen starre Teile aufweist, die mit der Lamelle in Verbindung stehen. Alternativ ist es auch denkbar, den gesamten Schwingarm im Wesentlichen starr auszubilden und über ein Gelenk an dem Bauteil der Lenkungsanordnung zu fixieren, wobei dann eine Feder vorgesehen sein sollte, die das Gelenk und damit den Schwingarm in Vorspannung versetzt. Insgesamt können der Klopfhammer und/oder der Schwingarm somit einteilig oder mehrteilig ausgeführt sein.

Der Klopfhammer kann in seiner Ruhestellung, in der die Erzeugereinrichtung abgeschaltet ist, an dem Bauteil der Lenkungseinrichtung, mit dem er in Kontakt bringbar ist, anliegen. Genauso gut ist es möglich, dass der Klopfhammer in der genannten Ruheposition von dem Bauteil der Lenkungsanordnung, mit dem er in Kontakt bringbar ist, beabstandet ist. Durch Anschalten der Erzeugereinrichtung kann in beiden Varianten erreicht werden, dass der Klopfhammer temporär mit dem Bauteil der Lenkungsanordnung in Kontakt gebracht wird und von diesem auch wieder abgehoben wird, womit sich ein schlagendes bzw. klopfendes Signal ergibt, dass sowohl hörbar als auch fühlbar für den Fahrer und gegebenenfalls auch andere Fahrzeuginsassen sein kann.

Günstigerweise ist der Klopfhammer vom Fixierbereich beabstandet am Schwingarm angeordnet. Besonders bevorzugt ist dabei, wenn der Fixierbereich das eine Ende des Schwingarms bildet und am dazu gegenüberliegenden Ende des Schwingarms bzw. der Lamelle der Klopfhammer angeordnet ist.

Bei der Erzeugereinrichtung ist es zunächst einmal wichtig, dass sie so in Kontakt mit dem Schwingarm steht, dass sie diesen in Schwingung versetzen kann. Hierzu ist vorgesehen, dass die Erzeugereinrichtung am Schwingarm zwischen dem Fixierbereich und dem Klopfhammer, vorzugsweise im Bereich der Lamelle, angreift. Dabei ist es wiederum günstig, wenn die Erzeugereinrichtung, vorzugsweise ausschließlich, vom Schwingarm oder der gegebenenfalls vorhandenen Lamelle getragen wird. Dies ist so zu verstehen, dass, vorzugsweise ausschließlich, der Schwingarm die Erzeugereinrichtung gegen die Schwerkraft in Position hält. Dabei ist es unerheblich, ob die Erzeugereinrichtung darüber hinaus mit Verbindungskabeln oder dergleichen in Kontakt steht.

Der Schwingarm kann grundsätzlich an demselben Bauteil der Lenkungsanordnung fixiert sein, mit dem auch der Klopfhammer, insbesondere beim Klopfen, in Kontakt bringbar ist. Es ist aber auch denkbar, dass der Schwingarm an einem ersten Bauteil der Lenkungsanordnung fixiert ist und der Klopfhammer mit einem anderen Bauteil der Lenkungsanordnung in Kontakt bringbar ist bzw. gegen dieses klopft.

Als Erzeugereinrichtung kommen Vibratoren oder andere Erzeuger von mechanischen Schwingungen oder Klopfsignalen in Frage. Dies können z. B. piezoelektronische Schwinger oder Magnetspulenanordnungen oder, vorzugsweise elektrische, Motoren zum Bewegen, vorzugsweise Drehen, einer Unwucht oder eines Exzenters sein. Solche Erzeugereinrichtungen für die Schwingungen sind beim Stand der Technik an sich bekannt und werden hier nur beispielhaft in verschiedenen Ausführungsformen erläutert.

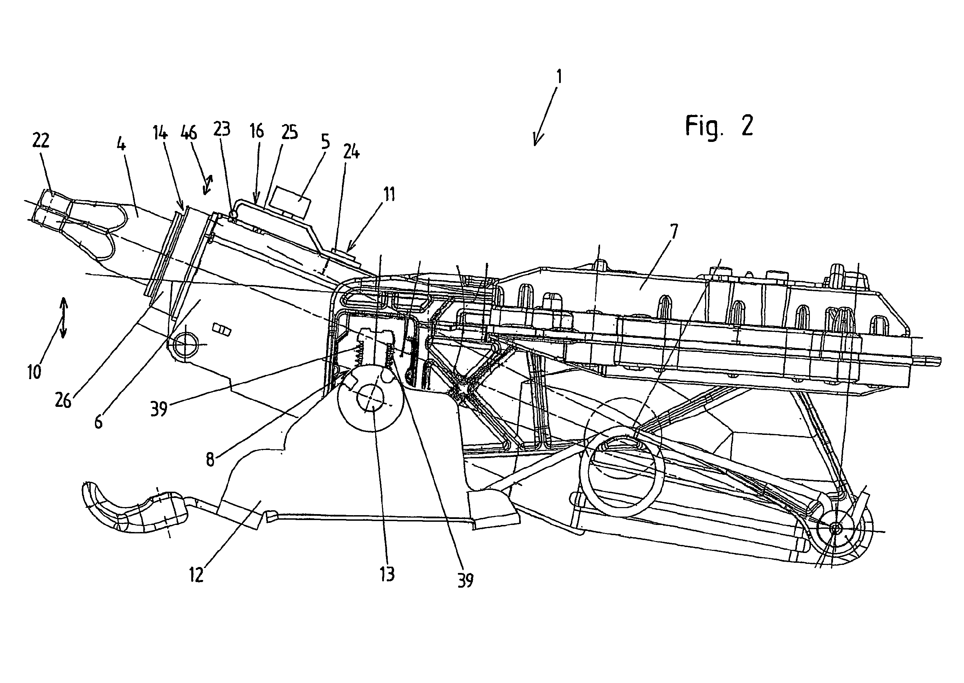

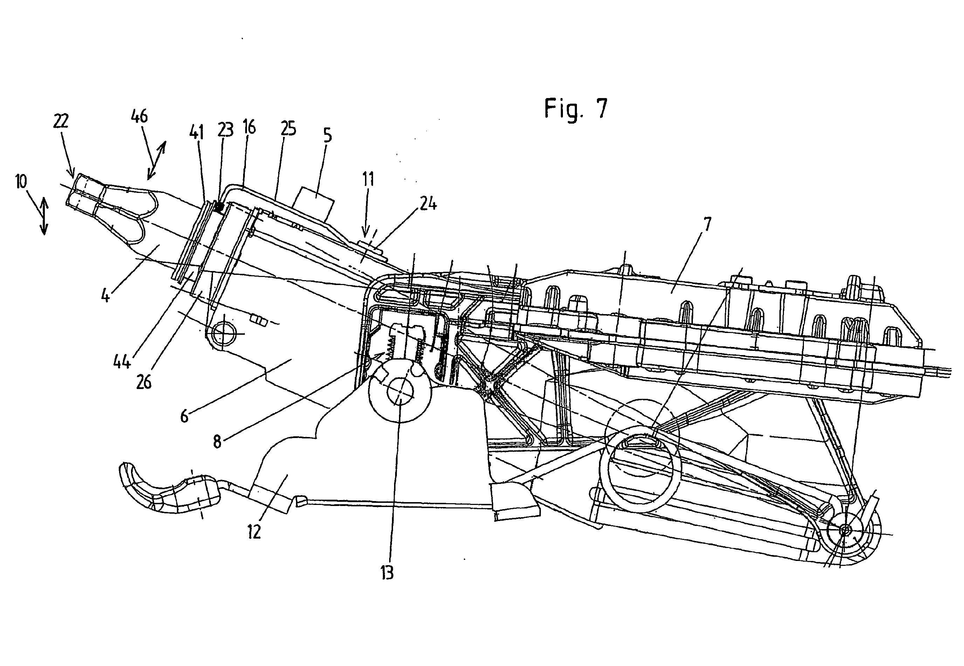

Weitere Einzelheiten und Merkmale bevorzugter Ausführungsbeispiele der Erfindung ergeben sich aus der nachfolgenden Figurenbeschreibung. Dabei zeigen:
Fig. 1 eine Prinzipskizze,
Fig. 2 ein erstes erfindungsgemäßes Ausführungsbeispiel,
Fig. 3 ein zweites erfindungsgemäßes Ausführungsbeispiel,
Fig. 4. ein drittes erfindungsgemäßes Ausführungsbeispiel,
Fig. 5. ein viertes erfindungsgemäßes Ausführungsbeispiel,
Fig. 6 ein fünftes erfindungsgemäßes Ausführungsbeispiel und
Fig. 7 ein sechstes erfindungsgemäßes Ausführungsbeispiel und
Fig. 8 bis 11 verschiedene Beispiele für Erzeugereinrichtungen.

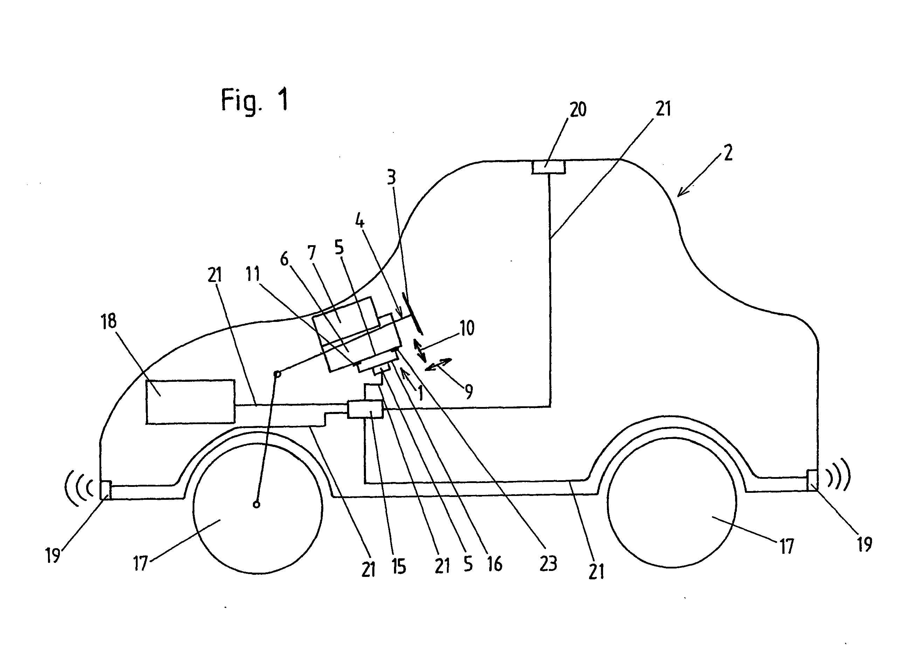

Fig. 1 zeigt zunächst stark schematisiert die Anordnung der Lenkungsanordnung 1 im Fahrzeug 2. Die Lenkungsanordnung 1 weist dabei ein mit der Lenkspindel 4 drehfest verbundenes Lenkrad 3 auf. Die Lenkspindel 4 ist wiederum drehbar in der Manteleinheit 6 gelagert. Zur Befestigung der Manteleinheit 6 ist das Tragteil 7 vorgesehen, das z. B. über Verschrauben oder Verschweißen oder andere Befestigungsmaßnahmen an der Karosserie
oder einem Rahmen des Fahrzeugs befestigt sein kann. Die Übertragung der Drehbewegung der Lenkspindel 4 auf die vorderen Räder 17 erfolgt wie beim Stand der Technik bekannt und ist hier nicht im Detail dargestellt. Um das Lenkrad 3 in seiner Lage an den Fahrer anpassen zu können ist eine, nicht in Fig. 1 aber beispielhaft in den Ausführungsbeispielen der Fig. 2 und 7 dargestellten Feststelleinrichtung 8 vorgesehen, die es erlaubt, eine die Lenkspindel 4 lagernde bzw. tragende Manteleinheit 6 in verschiedenen Positionen an dem Tragteil 7 zu befestigen. Günstig ist es dabei, die Feststelleinrichtung 8 so auszubilden, dass das Lenkrad 3 in Längsrichtung 9 der Lenkspindel und/oder in, bezogen auf die gezeigte Einbaustellung, vertikaler Richtung 10 verstellbar ist.

In der in Fig. 1 schematisiert gezeigten Variante ist der Schwingarm 16 in seinem Fixierbereich 11 an der Manteleinheit 6 fixiert. Zwischen dem Fixierbereich 11 und dem Klopfhammer 23 trägt der Schwingarm 16 die Erzeugereinrichtung 5, über die er in Schwingung versetzt werden kann, wodurch der Klopfhammer 23 gegen die Manteleinheit 6 klopft.

Über eine Signalleitung 21 steht die Erzeugereinrichtung 5 mit der Regeleinrichtung 15 in Verbindung. Im dargestellten Ausführungsbeispiel empfängt die Regeleinrichtung 15 über entsprechende Signalleitungen 21 verschiedene Zustandsparameter des Fahrzeuges 2, um diese zu überwachen und bei Abweichungen von vorgegebenen Sollwerten bzw. Sollwertebereichen ein Signal zur Ansteuerung der Erzeugereinrichtung 5 zu erzeugen. Konkret dargestellt sind in diesem Zusammenhang an der Vorder- und der Rückseite des Fahrzeuges 2 Sensoren 19 zur Bestimmung des Abstands und/oder der Relativgeschwindigkeit von sich vor oder hinter dem Fahrzeug 2 befindenden anderen Fahrzeugen oder Hindernissen. Darüber hinaus weist das in Fig. 1 dargestellte Fahrzeug 2 auch einen Positionsbestimmungssensor 20 auf. Dieser kann eine an sich bekannte GPS (Global-Positioning-System)- Antenne eines Navigationssystems sein. Darüber hinaus empfängt die Regeleinrichtung 15 über die entsprechende Signalleitung 21 auch Zustandsparameter des Verbrennungsmotors 18. Die gezeigten Sensoren sind jedoch nur Beispiele. Grundsätzlich ist es denkbar, jegliche beim Stand der Technik bekannte Überwachung von Zustandsparametern des Fahrzeugs 2 in einer erfindungsgemäßen Ausführungsform mit einer Lenkungsanordnung zu kombinieren. Die jeweils gemessenen Parameter werden dabei günstigerweise mit Sollwerten oder Sollwertebereichen verglichen. Eine Abweichung der gemessenen Parameter von den Sollwerten oder Sollwertebereichen kann dann von der Regeleinrichtung 15 dahingehend ausgewertet werden, dass die Erzeugereinrichtung 5 über die Signalleitung 21 ein Ansteuersignal erhält, woraufhin sie den Schwingarm 16 in Schwingung versetzt und der Klopfhammer 23 ein haptisches und/oder akustisches Signal an der Manteleinheit 6 erzeugt, welches über die Lenkspindel 4 auf das Lenkrad 3 und/oder in die Fahrgastzelle des Fahrzeugs 2 übertragen wird. Auf diese Art und Weise können z.B. Motorparameter wie Drehzahl, Öldruck, Temperatur, verschiedene Zündparameter und dgl. überwacht und ausgewertet werden, um bei Fehlfunktionen oder anderen Abweichungen von Sollwerten ein haptisches und/oder akustisches Signal zu erzeugen. Dieses Signal kann auch dazu verwendet werden, die Aufmerksamkeit des Fahrers auf eine optische Anzeige zu lenken. Das Gleiche gilt natürlich auch für andere Fahrzeugparameter wie Reifendruck, Füllstand des Brennstofftanks, Schließzustand der Türen und Klappen des Fahrzeugs, Funktionsfähigkeit der Beleuchtung des Fahrzeugs usw.. Darüber hinaus ist es auch möglich, den Abstand und die Relativgeschwindigkeit über die Sensoren 19 zu überwachen, um bei Gefahrensituationen ein entsprechendes Signal zu erzeugen. Über den Positionsbestimmungssensor 20 und eine entsprechende Regeleinrichtung 15 ist es auch möglich, zu überwachen, dass das Fahrzeug 2 nicht von dem vorgegebenen Weg abweicht. So kann z.B. vorgesehen sein, dass in Verbindung mit einem an sich bekannten Navigationssystem Signale erzeugt werden, wenn das Fahrzeug den vorgegebenen Weg verlässt. Auf gleiche Weise kann auch verhindert werden, dass z.B. durch Einschlafen des Fahrers das Fahrzeug von der Spur bzw. der Straße abkommt, indem entsprechende haptische und/oder akustische Signale erzeugt werden, wenn das Fahrzeug 2 von der Spur abkommt. All dies sind, wie erwähnt, aber nur Beispiele.

Günstige Ausgestaltungsformen sehen vor, dass die Erzeugereinrichtung 5 dazu geeignet ist, vorzugsweise in Abhängigkeit einer Ansteuerung durch eine Regeleinrichtung 15, zumindest zwei, vorzugsweise mehrere, unterschiedliche und vom inaktiven Zustand der Erzeugereinrichtung 5 verschiedene Signale bzw. Schwingungen zu erzeugen. Dies ist z.B. möglich, indem die unterschiedlichen Signale sich in ihrer Amplitude und/oder Frequenz und/oder Dauer und/oder Richtung voneinander unterscheiden. Hierdurch ist es möglich, die Art, die Dauer und/oder die Stärke des vom Klopfhammer erzeugten Signals an die jeweilige Gefahrensituation anzupassen. Bei geringer Sollwertüber- oder-unterschreitung wird z.B. ein vergleichsweise schwaches oder kurzes Signal erzeugt, das mit ansteigender Gefährdungssituation entsprechend verstärkt, verlängert oder verändert wird, also in irgendeiner Form für den Benutzer deutlicher spürbar wie z.B. hektischer wird. Genauso gut ist es auch möglich, für verschiedene überwachte Parameter verschiedene Signale zu erzeugen, damit der Benutzer an der Art des Signals erkennt, bei welchem der überwachten Parameter eine Abweichung vom Sollwert oder Sollwertebereich eingetreten ist.

Fig. 2 zeigt nun in einem ersten konkreten Ausführungsbeispiel eine erfindungsgemäße Lenkungsanordnung, wobei aber nur der für dieses Ausführungsbeispiel relevante obere Bereich der Lenkungsanordnung gezeigt ist. Die Lenkungsanordnung 1 bzw. Lenksäule umfasst eine Lenkspindel 4, von der ein an ein Anschlussstück 22 für ein Lenkrad 3 oder dergleichen anschließender Abschnitt in einer Manteleinheit 6 drehbar gelagert ist. Die Manteleinheit 6 wird von einer am Chassis eines Kraftfahrzeuges anbringbaren Trageinheit 7 getragen. Im geöffneten Zustand einer Feststelleinrichtung 8 kann die Manteleinheit 6 gegenüber der Trageinheit 7 verstellt werden, im gezeigten Ausführungsbeispiel in eine Verstellrichtung 10.

Auch wenn dies in diesem Ausführungsbeispiel nicht gezeigt ist, kann wie beim Stand der Technik bekannt, die Feststelleinrichtung 8 auch so ausgebildet sein, dass zusätzlich oder alternativ zur Bewegungsrichtung 10 auch eine zweite Verstellrichtung 9, in der die Lenksäule in axialer Richtung der Lenkspindel 4 verstellbar ist, ermöglicht ist. Ob nun sowohl eine Verstellbarkeit in axialer Richtung 9 als auch in Neigungs- bzw. Höhenrichtung 10 möglich ist, ist nicht erfindungswesentlich.

Die Feststelleinrichtung 8 wird mittels des Handbedienhebels 12 geöffnet und geschlossen. Dieser ist hierzu fix mit dem Spannbolzen 13 verbunden. Durch Schwenken des Betätigungshebels 12 um die Längsachse des Spannbolzens 13 wird die Feststelleinrichtung 8 zwischen dem geöffneten und dem geschlossenen Zustand verstellt. Dies ist an sich bekannt. Fig. 2 zeigt die Stellung des Handbedienhebels 12 in der geschlossenen Stellung der Feststelleinrichtung 8 in der die Lenkspindel 4 in ihrer Position fixiert ist. Die Feststelleinrichtung 8 wirkt im gezeigten Ausführungsbeispiel formschlüssig über die ineinander eingreifenden Verzahnungen 39. Alternativ zu einer formschlüssig wirkenden Feststelleinrichtung 8, wie hier gezeigt, können auch reibschlüssig wirkende Feststelleinrichtungen 8 mit und ohne Lamellen, wie sie beim Stand der Technik bekannt sind, mit einem erfindungsgemäßen Schwingarm 16 ausgerüstet werden. Die Art der Feststellung der Manteleinheit 6 gegenüber der Trageinheit 7 im geschlossenen Zustand der Feststelleinrichtung 8 und der durch Verschwenken des Handbedienhebels 12 betätigte Mechanismus zum Öffnen und Schließen der Feststelleinrichtung 8 ist nicht Gegenstand der vorliegenden Erfindung. Die in Fig. 2 gezeigte Variante ist nur ein Beispiel. Erfindungswesentlich ist vielmehr der Schwingarm 16, welcher im hier gezeigten Beispiel an seinem lenkradseitigen Ende den Klopfhammer 23 trägt und an seinem, dem gegenüber entgegengesetzten Ende im Fixierbereich 11 durch eine Schraube 24, eine Niete oder dgl. an der Manteleinheit 6 fixiert ist. Als Fixierung kann natürlich auch eine Schweißverbindung, ein Verlöten oder sonst jede an sich andere bekannte Art der Verbindung von zwei Bauteilen im Fixierbereich 11 vorgesehen sein. Im gezeigten Ausführungsbeispiel ist der Klopfhammer 23 mit demselben Bauteil der Lenkungsanordnung 1, nämlich mit der Manteleinheit 6 in Kontakt bringbar, an dem auch der Schwingarm 16 fixiert ist. In der hier dargestellten Ruhestellung liegt bei diesem Ausführungsbeispiel der Klopfhammer 23 an dem Bauteil der Lenkungsanordnung, mit dem er in Kontakt bringbar ist - hier die Manteleinheit 6 - an. Sobald die Erzeugereinrichtung 5 in Betrieb gesetzt wird, wird der Schwingarm 16 und damit auch der Klopfhammer 23 in eine Schwingbewegung versetzt, wodurch der Klopfhammer 23 in Abhängigkeit des von der Erzeugereinrichtung 5 erzeugten Signals gegen die Manteleinheit 6 klopft. Im gezeigten Beispiel besteht der Schwingarm 16 im Wesentlichen über seine gesamte Länge aus der elastischen bzw. schwingungsfähigen Lamelle 25. Dies kann z. B. eine Metalllamelle, eine Blattfeder oder dgl. sein. Die Erzeugereinrichtung 5 wird von dieser Lamelle 25 getragen. Der Klopfhammer 23 ist hier am Schwingarm 16 bzw. der Lamelle 25 einstückig angeformt. Er kann aber natürlich auch in jeder anderen bekannten Art und Weise an Schwingarm 16 befestigt sein.

Die Manteleinheit 6 übernimmt, wie an sich bekannt, die tragende Funktion für die Lenkspindel 4, da letztere über die in der Manteleinheit 6 bzw. in deren Lagerbuchse 26 angeordneten Lager 14 gelagert ist. In diesem Zusammenhang ist somit vorgesehen, dass die Lenkspindel 4 in einer Einbaustellung der Lenkungsanordnung im Fahrzeug von der Manteleinheit 6 getragen wird, die Lenkspindel 6 somit günstigerweise von der Manteleinheit 6 gegen die Schwerkraft im Fahrzeug gehalten wird. Um dies zu realisieren, kann, wie hier ausgeführt und allgemein bekannt, vorgesehen sein, dass die Manteleinheit 6 zumindest bereichsweise einen Hohlraum tunnelförmig oder röhrenförmig umschließt und die Lenkspindel 4 durch diesen Hohlraum hindurchgeführt ist. Zur Lagerung der Lenkspindel 4 in der Manteleinheit 6 können zumindest ein, vorzugsweise zumindest zwei der vorab bereits genannten Lager 14 in oder an der Manteleinheit 6 angeordnet sein. Zusätzlich zu dieser an sich bekannten tragenden Funktion der Manteleinheit 6 wird diese in diesem Ausführungsbeispiel auch als eine Übertragungseinrichtung zur Übertragung des Klopfsignals des Klopfhammers 23 genutzt. Die Manteleinheit 6 übernimmt dabei günstigerweise die Funktion eines Resonanzkastens, über den haptische, also über den Tastsinn spürbare, und/oder akustische, also hörbare, Signale auf die Lenkspindel 4 und damit auch auf das Lenkrad 3 bzw. eine anders ausgeformte Lenkhandhabe bzw. in den Innenraum der Fahrgastzelle des Fahrzeugs 2 übertragen werden können. Hierzu ist bevorzugt vorgesehen, dass die den Resonanzkasten bildende Manteleinheit 6 eine Resonanzfrequenz aufweist, die mit einer Frequenz des von dem Klopfhammer 23 erzeugbaren Klopfsignal übereinstimmt oder zumindest so nahe an der Frequenz des Signals liegt, dass die Manteleinheit 6 in Resonanz versetzt werden kann.

Im Ausführungsbeispiel gem. Fig. 2 ist der Schwingarm 16 im lenkradnahen vorderen Bereich oben auf der Manteleinheit 6 angeordnet. Dies muss natürlich nicht so sein. Der Schwingarm 6 kann natürlich auch in der Mitte oder im vom Lenkrad 3 abgewandten hinteren Bereich der Manteleinheit 6 angeordnet sein. Darüber hinaus ist natürlich auch die Anordnung des Schwingarms 16, bezogen auf die gezeigte Betriebsstellung, unten oder seitlich an oder in der Manteleinheit 6 möglich. Ebenso kann der Klopfhammer 23 auf den Tragteil 7 klopfen.

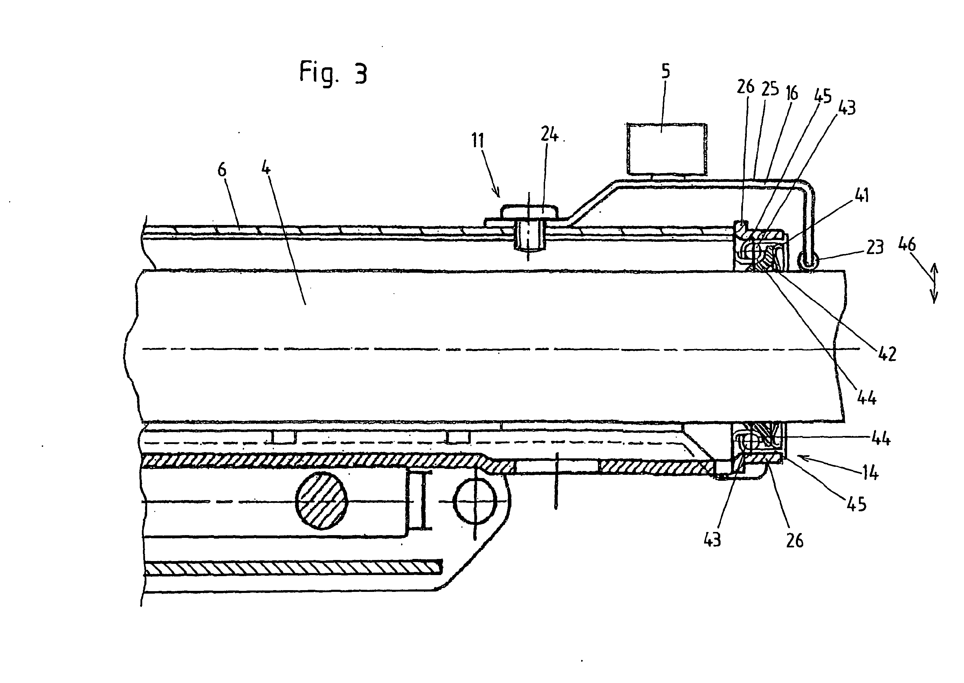

In der Ausführungsvariante gem. Fig. 3 ist der Klopfhammer 23 direkt mit der Lenkspindel 4 in Kontakt bringbar. Das Klopfsignal wird somit direkt in die Lenkspindel 4 eingeleitet. Dabei ist im gezeigten Ausführungsbeispiel nach wie vor vorgesehen, dass der Schwingarm 16 mit seinem Fixierbereich 11 an der Manteleinheit 6 befestigt ist. Auch dies ist jedoch nur ein Beispiel. Auch andere Befestigungsmöglichkeiten sind denkbar. Günstig ist dabei jedenfalls generell die Befestigung des Schwingarms 16 an einem sich nicht drehenden Teil der Lenkungsanordnung 1, da dann die hier nicht eingezeichneten Versorgungskabel zur Ansteuerung der Erzeugereinrichtung 5 nicht einer Drehbewegung unterzogen sind. Alternativ zu der in Fig. 3 gezeigten Variante ist es natürlich auch möglich, den Schwingarm 16 samt Erzeugereinrichtung 5 und Klopfhammer 23 innerhalb der Manteleinheit 6 anzuordnen.

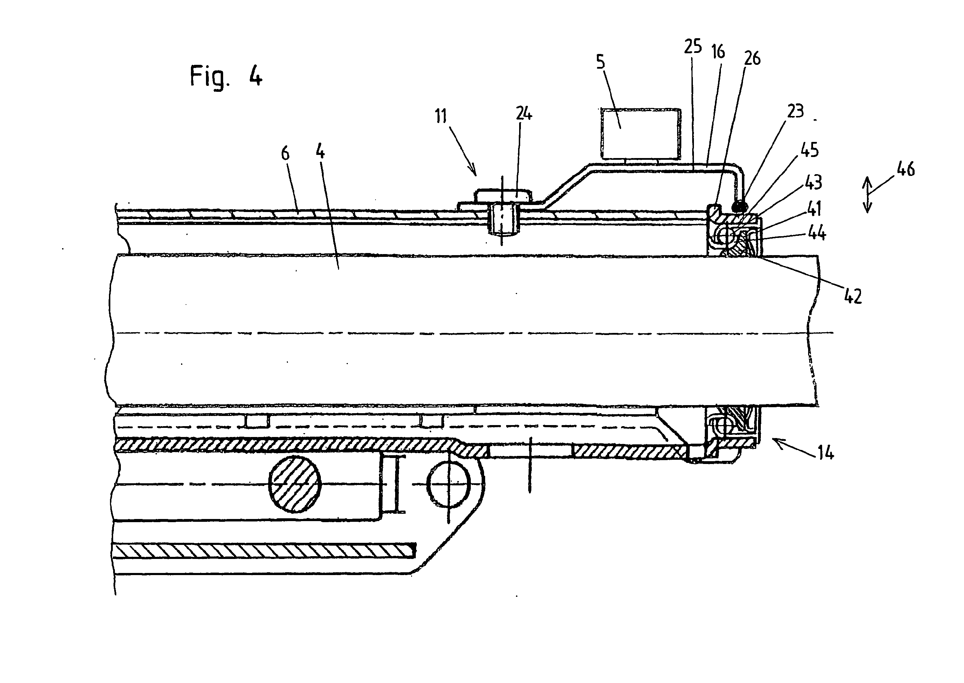

Im Ausführungsbeispiel gem. Fig. 4 wurde ebenfalls die Fixierung des Schwingarms 16 an der Manteleinheit 6 beibehalten. Im Unterschied zu den vorhergehenden Ausführungsbeispielen ist hier jedoch vorgesehen, dass der Klopfhammer 23 mit der Lagerbuchse 26 in Kontakt bringbar ist bzw. beim Betrieb der Erzeugereinrichtung 5 auf diese klopft. Die Lagerbuchse 26 ist dabei der Teil der Manteleinheit 6, der das Lager 14 trägt. Die Lagerbuchse 26 kann einstückig mit der restlichen Manteleinheit 6 ausgebildet sein. Alternativ ist es auch möglich, die Lagerbuchse 26 an die restliche Manteleinheit 6 anzuschweißen. Darüber hinaus sind auch Verbindungen wie verschrauben, vernieten, Fügeverbindungen, ein miteinander verstemmen, verhämmern oder eine Verbindung über Laschen und dgl. denkbar. Letztendlich sollte die Verbindung zwischen Lagerbuchse 26 und Manteleinheit 6 günstigerweise so ausgebildet sein, dass die vom Klopfhammer 23 erzeugten Schwingungen auf die Manteleinheit 6 übertragen werden, um den vorab bzgl. Fig. 2 diskutierten Resonanzkasteneffekt erzielen zu können. Dieser wirkt dann zusätzlich zu der direkten Übertragung der erzeugten Schwingungen über die Lagerbuchse 26 und das Lager 14 auf die Lenkspindel 4. Eingezeichnet sind hier, wie auch in allen anderen Ausführungsbeispielen, die Schwingungsrichtungen 46, in denen der Klopfhammer 23 schwingt, wenn die Erzeugereinrichtung 5 in Betrieb gesetzt ist. Wie bereits auch in Fig. 3 ist in Fig. 4 aufgrund der gewählten Schnittdarstellung der in diesem Ausführungsbeispiel realisierte Aufbau des Lagers 14 zu sehen. Dies weist zunächst einmal einen an der Lagerbuchse 26 vorzugsweise drehfest angeordneten Lageraußenring 45 auf, in dem die Kugeln 43 laufen. Diese stützen sich nach innen gegen den Lagerinnenring 44 ab, welcher beim Drehen der Lenkspindel 4 gemeinsam mit der Lenkspindel 4 eine Drehbewegung relativ zum Lageraußenring 45 ausführt. Der Lagerinnenring 44 wird hier z.B. durch den Konusring 42 an der Lenkspindel 4 gehalten. Der auf die Lenkspindel 4 kraft- oder formschlüssig festgeklemmte Haltering 41 stützt den Konusring 42 in axialer Richtung der Lenkspindel 4 ab und verhindert dadurch, dass das so aufgebaute Lager 14 in axialer Richtung der Lenkspindel 4 auseinander bewegbar ist. Bei der in Fig. 4 dargestellten Anordnung wird somit ein Großteil des Klopfsignals direkt von der Lagerbuchse 26 über das so aufgebaute Lager 14 in die Lenkspindel 4 eingeleitet.

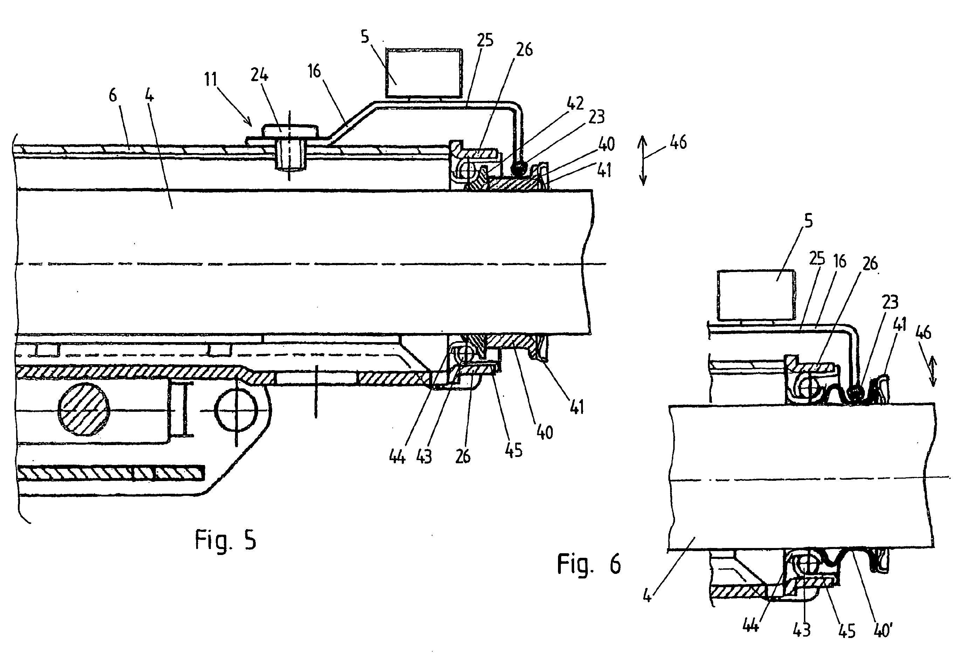

Das in Fig. 5 ebenfalls in einer Schnittdarstellung gezeigte Ausführungsbeispiel unterscheidet sich von dem gem. Fig. 4 durch den zwischen dem Konusring 42 und dem Haltering 41 angeordneten Distanzring 40, auf den der Klopfhammer 23 schlägt. Der Distanzring 40 dreht sich gemeinsam mit dem Lagerinnenring 44, dem Konusring 42 und dem Haltering 41 mit der Lenkspindel 4. Der Haltering 41 dient auch in diesem Ausführungsbeispiel dazu, das so aufgebaute Lager in axialer Richtung der Lenkspindel 4 gegen den an der Lagerbuchse 26 gehaltenen Lageraußenring 45 abzustützen.

Fig. 6 zeigt eine gegenüber Fig. 5 leicht abgewandelte Variante. Hier ist der Konusring 42 direkt in den Distanzring 40' integriert. Die sonstige Funktion entspricht der gemäß Fig. 5. Der so ausgebildete Distanzring 40' kann z. B. als Blechformteil einstückig hergestellt sein.

Insbesondere bei Ausgestaltungsformen, wie z.B. den in den Fig. 3, 5 und 6 gezeigten, bei denen der Klopfhammer 23 auf relativ zum Klopfhammer 23 drehbare Teile wie zum Beispiel die Lenkspindel 4 schlägt, kann vorgesehen sein, dass der Klopfhammer 23 als drehbares Element, wie zum Beispiel eine Rolle, ausgebildet ist oder ein solches drehbares Element aufweist. Die Drehachse dieses drehbaren Elementes bzw. der Rolle sollte dann günstigerweise parallel zur Drehachse der Lenkspindel ausgerichtet oder ausrichtbar sein, damit der Klopfhammer 23 nicht die Drehbewegung der Lenkspindel 4 hemmt.

Fig. 7 zeigt in einer Außenansicht analog zu Fig. 2 eine Variante, bei der an Stelle von Konusring 42 und Distanzring 40 der Lagerinnenring 44 soweit verlängert ist, dass der Klopfhammer 23 auf den Lagerinnenring 44 schlagen kann. Über entsprechende, hier nicht im Detail gezeigte Auswölbungen wird sichergestellt, dass die Kugeln 43 dabei in ihrer Position gehalten werden. Ein axiales Verschieben des gesamten Lagerinnenrings 44 wird wiederum durch den kraft- oder formschlüssig an der Lenkspindel 4 angreifenden Haltering 41 vermieden.

Bei allen, in den Fig. 4 bis 7 gezeigten Ausführungsbeispielen wird das vom Klopfhammer 23 erzeugte Signal einerseits direkt über die jeweils dazwischen angeordneten Bauteile auf die Lenkspindel 4 übertragen. Andererseits kann durch eine entsprechend feste mechanische Anbindung des Lagers 14 an die Manteleinheit 6 diese aber ebenfalls in Schwingung versetzt werden, womit sie, wie eingangs erläutert, ebenfalls als Resonanzkasten genutzt werden kann.

An dieser Stelle sei darauf hingewiesen, dass die gezeigten Varianten natürlich nur ausgewählte Ausführungsbeispiele der Erfindung sind. Darüber hinaus kann der Schwingarm 16 natürlich auch an anderen Bauteilen der Lenkungsanordnung fixiert bzw. der Klopfhammer 23 auch mit anderen Bauteilen der Lenkungsanordnung 1 in Kontakt bringbar sein. Insbesondere sei darauf hingewiesen, dass natürlich auch der Tragteil 7 oder die Feststelleinrichtung 8 als Gegenstück für den Klopfhammer 23 oder als Befestigungsmöglichkeit für den Schwingarm 16 vorgesehen sein können.

Neben den Eigenschaften der Erzeugereinrichtung 5 haben natürlich auch die Ausbildungsformen des Schwingarms 16, der Lamelle 25 und insbesondere auch die Form und Materialwahl des Klopfhammers 23 einen Einfluss darauf, wie das klopfende Signal haptisch und/oder akustisch wahrgenommen wird. Bezüglich des Klopfhammers 23 kann über die Materialwahl insbesondere die Tonlage, aber auch die Stärke des Signals mitgesteuert werden. So ist es z. B. möglich, den Klopfhammer 23 als Metallkopf auszubilden oder ihn z. B. durch Kunststoffbeschichtung oder dgl. zu dämpfen oder gleich ein anderes bzw. weicheres Material für den Klopfhammer 23 zu wählen.

Bevorzugterweise wird bei den gezeigten und auch anderen Ausführungsvarianten der Erfindung durch geeignete Maßnahmen verhindert, dass der Klopfhammer 23 auf Grund von Erschütterungen oder Vibrationen aus Versehen gegen einen Bauteil der Lenkungsanordnung schlägt, wenn dies gar nicht gewünscht ist. Dies kann zum Beispiel erreicht werden, indem der Klopfhammer 23 in seiner Ruhestellung von dem Teil, gegen den er klopfen soll, so weit entfernt ist, dass es nicht durch Schwingungen oder Vibrationen zum ungewollten Klopfen kommen kann. Ein alternative Maßnahme wäre auch, den Klopfhammer 23 in seiner Ruhestellung fest zu klemmen, und ihn nur frei zu geben, wenn er, angeregt durch die Erzeugereinrichtung 5, klopfen soll.

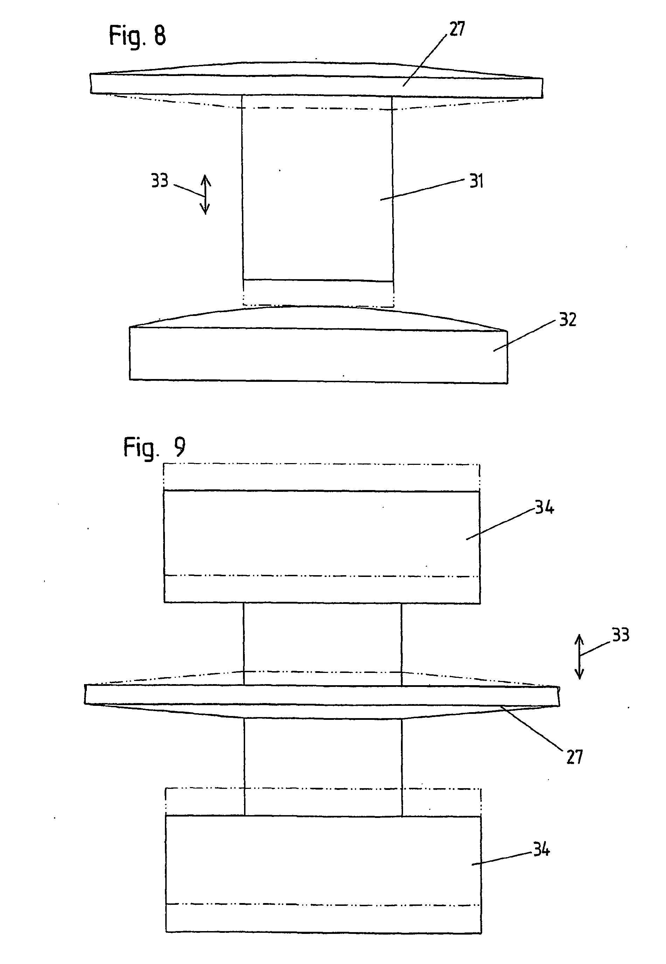

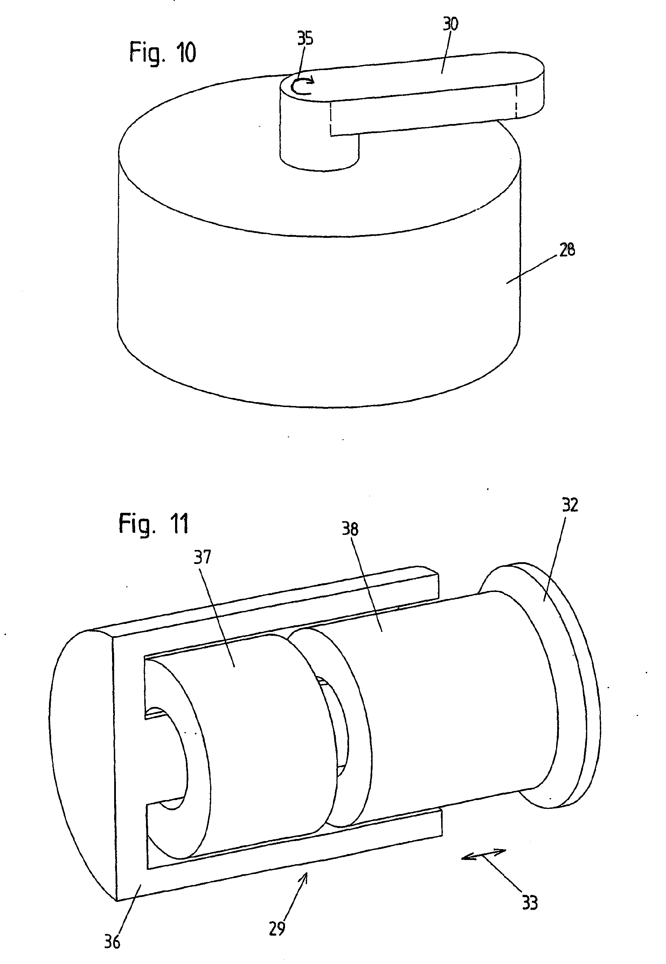

In den bisher beschriebenen Ausführungsbeispielen ist die Erzeugereinrichtung 5 jeweils nur stark vereinfacht dargestellt. Wie bereits eingangs erläutert, kommt als Erzeugereinrichtung 5 jeder geeignete Schwingungserzeuger in Betracht. Im Folgenden werden beispielhaft verschiedene Arten von Erzeugereinrichtungen 5 erläutert. Fig. 8 zeigt eine Variante bei der als Quelle ein piezoelektrischer Schwinger 27 vorgesehen ist. Durch entsprechende Anregung versetzt dieser das Hammerstück 31 in Einfachhub- oder Schwingbewegungen 33, wodurch dieses wiederum auf den Amboss 32 schlägt, über den das so erzeugte Signal auf den hier nicht dargestellten Schwingarm 16 weitergeleitet wird. Das Hammerstück 31 kann dabei an dem piezoelektrischen Schwinger 27 fixiert sein. Die durchgezogenen und unterbrochenen Strichdarstellungen zeigen wie auch beim Ausführungsbeispiel gemäß Fig. 9 die jeweils maximal ausgelenkten Postionen der jeweiligen Bauteile 27 bzw. 31 oder 34. Fig. 9 zeigt eine Variante einer Erzeugereinrichtung 5 bei der an dem piezoelektrischen Schwinger 27 zwei Zusatzmassen 34 angeordnet sind, die gemeinsam mit dem piezoelektrischen Schwinger 27 in eine Schwingbewegung 33 versetzt werden und so das Signal verstärken. Die Übertragung der Schwingung auf ein hier nicht dargestelltes Gehäuse der Erzeugereinrichtung 5 und damit letztendlich auf den Schwingarm 16 erfolgt über die Aufhängung des piezoelektrischen Schwingers 27. Fig. 10 zeigt ein Beispiel mit einem vorzugsweise elektrischen Motor 28. Dieser erzeugt eine Drehbewegung 35 des Exzenters 30. Durch seine Masse bzw. Unwucht erzeugt der Exzenter 30 dabei eine mechanische Schwingung, die über den Motor 28 bzw. dessen Gehäuse weiter übertragen wird. Fig. 11 zeigt eine Magnetspulenanordnung 29 für eine Erzeugereinrichtung 5. Auf dem den magnetischen Kern bildenden Polschuh 36 sitzen eine magnetisierbare Kernspule 37 und eine magnetisierbare Tauchspule 38. Eine der Spulen ist an dem Polschuh fixiert, die andere ist in Richtung der Schwingungsbewegung 33 beweglich gelagert. Durch entsprechende Polung der Spulen wird die bewegliche Spule in eine einmalige Bewegung oder in eine Schwingbewegung 33 versetzt, wodurch der Amboss 32 entsprechend mit Schlägen beaufschlagt bzw. in Schwingung versetzt wird. Das haptische Signal wird über den Amboss 32 weiter übertragen. Natürlich ist es dabei auch möglich, eine der Spulen durch einen Permanentmagneten zu ersetzen. Ebenso ist es denkbar, den Schwingarm mit einer Erzeugereinrichtung 5 nach dem an sich bekannten Klingelprinzip zu betätigen. Eine solche Erzeugereinrichtung 5 weist zumindest eine Magnetspule und zumindest einen Unterbrecherkontakt auf, wobei die Magnetspule den elastisch auslenkbaren Schwingarm 16 so lange anzieht oder abstößt bis der Schwingarm 16 oder ein daran befestigter Bauteil den Unterbrecherkontakt berührt und die Magnetspule ausschaltet, womit der Schwingarm und damit auch der Klopfhammer in Schwingung versetzt wird.

In den gezeigten Ausführungsbeispielen wurde die Erfindung anhand einer Lenkungsanordnung 1 für bodengebundene Kraftfahrzeuge wie z.B. PKW's und LKW's gezeigt. Natürlich können erfindungsgemäße Lenkungsanordnungen auch für Krafträder wie Motorräder, Mopeds und dgl. eingesetzt werden. Die Erfindung ist aber nicht zwingend nur auf Lenkungsanordnungen für bodengebundene Fahrzeuge beschränkt. Grundsätzlich ist es auch möglich, entsprechende Lenkungsanordnungen für Flugzeuge, Boote oder Schiffe einzusetzen, um nur einige Beispiele zu erwähnen.

### Legende zu den Hinweisziffern:

- 1: Lenkungsanordnung
- 2: Fahrzeug
- 3: Lenkrad
- 4: Lenkspindel
- 5: Erzeugereinrichtung
- 6: Manteleinheit
- 7: Tragteil
- 8: Feststelleinrichtung
- 9: Längsrichtung
- 10: vertikale Richtung
- 11 1: Fixierbereich
- 12: Handbedienhebel
- 13: Spannbolzen
- 14: Lager
- 15: Regeleinrichtung
- 16: Schwingarm
- 17: Rad
- 18: Verbrennungsmotor
- 19: Sensor
- 20: Positionsbestimmungssensor
- 21: Signalleitung
- 22: Anschlussstück
- 23: Klopfhammer
- 24: Schraube
- 25: Lamelle
- 26: Lagerbuchse
- 27: piezoelektrischer Schwinger
- 28: Motor
- 29: Magnetspulenanordnung
- 30: Exzenter
- 31: Hammerstück
- 32: Amboss

- 33: Schwingbewegung
- 34: Zusatzmasse
- 35: Drehbewegung
- 36: Polschuh
- 37: Kernspule
- 38: Tauchspule
- 39: Verzahnung
- 40, 40': Distanzring
- 41: Haltering
- 42: Konusring
- 43: Kugel
- 44: Lagerinnenring
- 45: Lageraußenring
- 46: Schwingungsrichtung

## Patentansprüche

1. Lenkungsanordnung (1) für ein Fahrzeug (2) mit einer drehbaren Lenkhandhabe, insbesondere einem Lenkrad (3), und einer damit drehfest verbundenen Lenkspindel (4) und zumindest einer Erzeugereinrichtung (5) für zumindest eine mechanische Schwingung, insbesondere ein haptisches Signal, wobei die Lenkungsanordnung (1) zumindest einen Schwingarm (16) aufweist und am Schwingarm (16) ein Klopfhammer (23) gehalten ist und der Schwingarm (16) zur Auslenkung des Klopfhammers (23) mit der Erzeugereinrichtung (5) in Verbindung steht, wobei der Schwingarm (16) an einem Bauteil der Lenkungsanordnung in einem Fixierbereich (11) fixiert ist und der Klopfhammer (23) am Schwingarm (16) gegenüber dem Fixierbereich (11) auslenkbar gehalten ist und der Klopfhammer (23) mit einem Bauteil der Lenkungsanordnung in Kontakt bringbar ist, **dadurch gekennzeichnet, dass** die Erzeugereinrichtung (5) am Schwingarm (16) zwischen dem Fixierbereich (11) und dem Klopfhammer (23) angreift.

2. Lenkungsanordnung (1) nach Anspruch 1, **dadurch gekennzeichnet, dass** der Schwingarm (16) zumindest eine elastische, vorzugsweise mittels der Erzeugereinrichtung (5) in mechanische Schwingung versetzbare, Lamelle (25) aufweist oder ist, an der der Klopfhammer (23) direkt oder indirekt gehalten ist.

3. Lenkungsanordnung (1) nach Anspruch 1 oder 2, **dadurch gekennzeichnet, dass** der Klopfhammer (23) vom Fixierbereich (11) beabstandet, vorzugsweise an einem zum Fixierbereich (11) gegenüberliegenden Ende des Schwingarms (16) oder der gegebenenfalls vorhandenen Lamelle (25), am Schwingarm (16) angeordnet ist.

4. Lenkungsanordnung (1) nach Anspruch 2 oder 3, **dadurch gekennzeichnet, dass** die Erzeugereinrichtung (5) am Schwingarm (16) zwischen dem Fixierbereich (11) und dem Klopfhammer (23) im Bereich der Lamelle (25) angreift.

5. Lenkungsanordnung (1) nach einem der Ansprüche 1 bis 4, **dadurch gekennzeichnet, dass** die Erzeugereinrichtung (5), vorzugsweise ausschließlich, vom Schwingarm (16) oder der gegebenenfalls vorhandenen Lamelle (25) getragen ist.

6. Lenkungsanordnung (1) nach einem der Ansprüche 1 bis 5, **dadurch gekennzeichnet, dass** der Klopfhammer (23) in einem Betriebszustand auf das Bauteil der Lenkungsanordnung klopft.

7. Lenkungsanordnung (1) nach einem der Ansprüche 1 bis 6, **dadurch gekennzeichnet, dass** der Schwingarm (16) an demselben Bauteil der Lenkungsanordnung fixiert ist, mit dem auch der Klopfhammer (23) in Kontakt bringbar ist.

8. Lenkungsanordnung (1) nach einem der Ansprüche 1 bis 6, **dadurch gekennzeichnet, dass** der Schwingarm (16) an einem ersten Bauteil der Lenkungsanordnung fixiert ist und der Klopfhammer mit einem anderen Bauteil der Lenkungsanordnung in Kontakt bringbar ist.

9. Lenkungsanordnung (1) nach einem der Ansprüche 1 bis 8, **dadurch gekennzeichnet, dass** die Lenkspindel (4) drehbar in einer Manteleinheit (6) der Lenkungsanordnung (1) gelagert ist und der Schwingarm (16) mit seinem Fixierbereich an der Manteleinheit (6) fixiert ist.

10. Lenkungsanordnung (1) nach einem der Ansprüche 1 bis 9, **dadurch gekennzeichnet, dass** die Lenkspindel (4) drehbar in einer Manteleinheit (6) der Lenkungsanordnung (1) gelagert ist und der Klopfhammer (23) direkt mit der Manteleinheit (6) in Kontakt bringbar ist.

11. Lenkungsanordnung (1) nach einem der Ansprüche 1 bis 9, **dadurch gekennzeichnet, dass** die Lenkspindel (4) drehbar in einer ein Lager (14) tragenden Lagerbuchse (26), vorzugsweise einer Manteleinheit (6), der Lenkungsanordnung (1) gelagert ist und der Klopfhammer (23) direkt mit der Lagerbuchse (26) in Kontakt bringbar ist.

12. Lenkungsanordnung (1) nach einem der Ansprüche 1 bis 9, **dadurch gekennzeichnet, dass** der Klopfhammer (23) direkt mit der Lenkspindel (4) in Kontakt bringbar ist.

13. Lenkungsanordnung (1) nach einem der Ansprüche 1 bis 9, **dadurch gekennzeichnet, dass** die Lenkspindel (4) von einem Lagerinnenring (44) umgeben und/oder mit diesem drehfest verbunden ist und der Klopfhammer (23) direkt mit dem Lagerinnenring (44) in Kontakt bringbar ist.

14. Lenkungsanordnung (1) nach einem der Ansprüche 1 bis 9, **dadurch gekennzeichnet, dass** die Lenkspindel (4) von einem Distanzring (40) umgeben ist, welcher von einem auf der Lenkspindel (4) kraft- oder formschlüssig befestigten, vorzugsweise aufgeklemmten, Haltering (41) gegen ein die Lenkspindel (4) aufnehmendes Lager (14) gedrückt ist, wobei der Klopfhammer (23) direkt mit dem Distanzring (40) in Kontakt bringbar ist.

15. Lenkungsanordnung (1) nach einem der Ansprüche 1 bis 14, **dadurch gekennzeichnet, dass** der Klopfhammer (23) als drehbares Element, vorzugsweise als Rolle, ausgebildet ist oder ein solches drehbares Element aufweist, wobei vorzugsweise eine Drehachse des drehbaren Elementes, vorzugsweise der Rolle, parallel zu einer Drehachse der Lenkspindel (4) ausgerichtet oder ausrichtbar ist.

## Claims

1. Steering arrangement (1) for a vehicle (2), comprising a rotatable steering handle, in particular a steering wheel (3), and a steering spindle (4) connected rotationally fixed thereto, and at least one generator device (5) for at least one mechanical vibration, in particular a haptic signal, the steering arrangement (1) comprising at least one rocker bar (16) and on the rocker bar (16) a pinging hammer (23) being held and the rocker bar (16) for the deflection of the pinging hammer (23) being connected with the generator device (5), the rocker bar (16) being fixed on a structural part of the steering arrangement in a fixing region (11), and the pinging hammer (23) being held on the rocker bar (16) deflectable with respect to the fixing region (11) and the pinging hammer (23) being able to be brought into contact with a structural part of the steering arrangement, **characterised in that** the generator device (5) engages on the rocker bar (16) between the fixing region (11) and the pinging hammer (23).

2. Steering arrangement (1) according to Claim 1, **characterised in that** the rocker bar (16) comprises or is at least one elastic lamella (25), which can be set into mechanical vibration preferably by means of the generator device (5) and on which the pinging hammer (23) is held directly or indirectly.

3. Steering arrangement (1) according to Claim 1 or 2, **characterised in that** the pinging hammer (23) is disposed on the rocker bar (16) spaced apart from the fixing region (11), preferably on an end of the rocker bar (16),
or the optionally provided lamella (25), opposite the fixing region (11).

4. Steering arrangement (1) according to Claim 2 or 3, **characterised in that** the generator device (5) engages on the rocker bar (16) between the fixing region (11) and the pinging hammer (23) in the region of the lamella (25) .

5. Steering arrangement (1) according to one of Claims 1 to 4, **characterised in that** the generator device (5) is borne, preferably exclusively, by the rocker bar (16) or the optionally provided lamella (25).

6. Steering arrangement (1) according to one of Claims 1 to 5, **characterised in that** the pinging hammer (23) in an operating state impinges on the structural part of the steering arrangement.

7. Steering arrangement (1) according to one of Claims 1 to 6, **characterised in that** the rocker bar (16) is fixed on the same structural part of the steering arrangement with which the pinging hammer (23) can also be brought into contact.

8. Steering arrangement (1) according to one of Claims 1 to 6, **characterised in that** the rocker bar (16) is fixed on a first structural part of the steering arrangement, and the pinging hammer can be brought into contact with another structural part of the steering arrangement.

9. Steering arrangement (1) according to one of Claims 1 to 8, **characterised in that** the steering spindle (4) is rotatably bearing-supported in a jacket unit (6) of the steering arrangement (1) and the rocker bar (16) is fixed with its fixing region on the jacket unit (6).

10. Steering arrangement (1) according to one of Claims 1 to 9, **characterised in that** the steering spindle (4) is rotatably bearing-supported in a jacket unit (6) of the steering arrangement (1) and the pinging hammer (23) can be brought directly into contact with the jacket unit (6).

11. Steering arrangement (1) according to one of Claims 1 to 9, **characterised in that** the steering spindle (4) is rotatably bearing-supported in a bearing bushing (26), preferably of a jacket unit (6), supporting a bearing (14) of the steering arrangement (1) and the pinging hammer (23) can be brought directly into contact with the bearing bushing (26).

12. Steering arrangement (1) according to one of Claims 1 to 9, **characterised in that** the pinging hammer (23) can be brought directly into contact with the steering spindle (4).

13. Steering arrangement (1) according to one of Claims 1 to 9, **characterised in that** the steering spindle (4) is encompassed by an inner bearing ring (44) and/or is connected rotationally fixed thereto and the pinging hammer (23) can be brought directly into contact with the inner bearing ring (44).

14. Steering arrangement (1) according to one of Claims 1 to 9, **characterised in that** the steering spindle (4) is encompassed by a spacer ring (40) which is pressed, by a retraining ring (41) secured, preferably clamped, on the steering spindle (4) under force or form closure, against a bearing (14) receiving the steering spindle (4), the pinging hammer (23) being able to be brought directly into contact with the spacer ring (40).

15. Steering arrangement (1) according to one of Claims 1 to 14, **characterised in that** the pinging hammer (23) is embodied as a rotatable element, preferably a roller, or comprises such a rotatable element, preferably a rotational axis of the rotatable element, preferably of the roller, being oriented or orientable parallel to a rotational axis of the steering spindle (4).

## Revendications

1. Système de direction (1) pour un véhicule (2) avec un organe de direction rotatif, en particulier un volant (3), un arbre de direction (4) solidaire en rotation de ce dernier, et au moins un dispositif générateur (5) destiné à générer au moins une oscillation mécanique, en particulier un signal haptique, ledit système de direction (1) comportant au moins un bras oscillant (16), un marteau de frappe (23) étant maintenu sur le bras oscillant (16), le bras oscillant (16) étant relié au dispositif générateur (5) pour pouvoir dévier le marteau de frappe (23), le bras oscillant (16) étant fixé dans une zone de fixation (11) sur un composant du système de direction, le marteau de frappe (23) étant maintenu sur le bras oscillant (16) de manière à pouvoir être dévié par rapport à la zone de fixation (11), et le marteau de frappe (23) pouvant être mis en contact avec un composant du système de direction, **caractérisé en ce que** le dispositif générateur (5) est en prise avec le bras oscillant (16) entre la zone de fixation (11) et le marteau de frappe (23).

2. Système de direction (1) selon la revendication 1, **caractérisé en ce que** le bras oscillant (16) comporte, ou consiste en au moins une lamelle élastique (25), pouvant être soumise à une oscillation mécanique, de préférence au moyen du dispositif générateur (5), et contre laquelle le marteau de frappe (23) est directement ou indirectement maintenu.

3. Système de direction (1) selon la revendication 1 ou la revendication 2, **caractérisé en ce que** le marteau de frappe (23) est disposé sur le bras oscillant (16) à distance de la zone de fixation (11), de préférence à une extrémité, opposée à la zone de fixation (11), du bras oscillant (16) ou de la lamelle (25) éventuellement existante.

4. Système de direction (1) selon la revendication 2 ou la revendication 3, **caractérisé en ce que** le dispositif générateur (5) est en prise avec le bras oscillant (16) entre la zone de fixation (11) et le marteau de frappe (23), au niveau de la lamelle (25).

5. Système de direction (1) selon l'une des revendications 1 à 4, **caractérisé en ce que** le dispositif générateur (5) est supporté de préférence exclusivement par le bras oscillant (16) ou la lamelle (25) éventuellement existante.

6. Système de direction (1) selon l'une des revendications 1 à 5, **caractérisé en ce que** le marteau de frappe (23) en fonctionnement percute le composant du système de direction.

7. Système de direction (1) selon l'une des revendications 1 à 6, **caractérisé en ce que** le bras oscillant (16) est fixé sur le composant du système de direction avec lequel le marteau de frappe (23) peut aussi être mis en contact.

8. Système de direction (1) selon l'une des revendications 1 à 6, **caractérisé en ce que** le bras oscillant (16) est fixé sur un premier composant du système de direction et **en ce que** le marteau de frappe peut être mis en contact avec un autre composant du système de direction.

9. Système de direction (1) selon l'une des revendications 1 à 8, **caractérisé en ce que** l'arbre de direction (4) est logé de manière à pouvoir tourner dans une unité d'enveloppe (6) du système de direction (1) et **en ce que** le bras oscillant (16) est fixé à l'unité d'enveloppe (6) par sa zone de fixation.

10. Système de direction (1) selon l'une des revendications 1 à 9, **caractérisé en ce que** l'arbre de direction (4) est logé de manière à pouvoir tourner dans une unité d'enveloppe (6) du système de direction (1) et **en ce que** le marteau de frappe (23) peut être mis directement en contact avec l'unité d'enveloppe (6).

11. Système de direction (1) selon l'une des revendications 1 à 9, **caractérisé en ce que** l'arbre de direction (4) est logé de manière à pouvoir tourner dans une douille (26) supportant un palier (14), de préférence une unité d'enveloppe (6) du système de direction (1), et **en ce que** le marteau de frappe (23) peut être mis directement en contact avec la douille de palier (26).

12. Système de direction (1) selon l'une des revendications 1 à 9, **caractérisé en ce que** le marteau de frappe (23) peut être mis directement en contact avec l'arbre de direction (4).

13. Système de direction (1) selon l'une des revendications 1 à 9, **caractérisé en ce que** l'arbre de direction (4) est entouré par une bague de roulement intérieure (44) et/ou est solidaire en rotation avec celle-ci, et **en ce que** le marteau de frappe (23) peut être mis directement en contact avec la bague de roulement intérieure (44).

14. Système de direction (1) selon l'une des revendications 1 à 9, **caractérisé en ce que** l'arbre de direction (4) est entouré d'une bague d'espacement (40), laquelle est serrée contre un palier (14) recevant l'arbre de direction (4) par une bague de maintien (41) fixée sur l'arbre de direction (4) par liaison mécanique ou correspondance de forme, de préférence par pincement, le marteau de frappe (23) pouvant être mis directement en contact avec la bague d'espacement (40).

15. Système de direction (1) selon l'une des revendications 1 à 14, **caractérisé en ce que** le marteau de frappe (23) est réalisé comme élément rotatif, de préférence comme rouleau, ou comporte un tel élément rotatif, un axe de rotation de l'élément rotatif, de préférence du rouleau, étant de préférence orienté ou orientable parallèlement à un axe de rotation de l'arbre de direction (4).
